# FASCICULE DE BREVET EUROPEEN

(11) **EP 3 948 040 B1**
(45) Date de publication et mention de la délivrance du brevet: **05.04.2023**
(21) Numéro de dépôt: 20713313.3
(22) Date de dépôt: 27.03.2020
(51) Int. Cl.: F16L 37/084, F16L 37/40, F16L 37/42

(54) **DISPOSITIF DE RACCORDEMENT AVEC UNE POSITION INTERMEDIAIRE DE DEVERROUILLAGE**
VERBINDUNGSVORRICHTUNG MIT EINER ZWISCHENENTRIEGELUNGSPOSITION
CONNECTING DEVICE WITH AN INTERMEDIATE UNLOCKING POSITION

(30) Priorité: 02.04.2019 FR 1903531
(43) Date de publication de la demande: 09.02.2022
(73) Titulaire: Parker Hannifin EMEA S.à.r.l., 1163 Etoy (CH)
(72) Inventeur: LE QUERE, Philippe, 35830 BETTON (FR)
(74) Mandataire: Lavialle, Bruno François Stéphane
(86) Numéro de dépôt international: PCT/EP2020/058757
(87) Numéro de publication internationale: WO 2020/201109

(56) Documents cités:
- EP-A1- 1 422 461
- FR-A1- 2 640 721

## Description

La présente invention concerne le domaine du transport de fluide et notamment les circuits de transport de fluides industriels ou automobiles.

### Arrière-plan technologique

L'une des principales difficultés dans les circuits de fluide est de permettre la déconnexion d'éléments de circuit lorsque le circuit est sous pression. Il est connu, notamment du document FR-A-2640721, un dispositif de raccordement comprenant un corps tubulaire délimitant un canal ayant, de manière axialement successive, un premier tronçon pour recevoir un embout et un deuxième tronçon dans lequel un clapet est monté pour être mobile axialement sous une poussée de l'embout depuis une position d'obturation d'un siège s'étendant entre le premier tronçon et le deuxième tronçon vers une position de dégagement du siège. Le premier tronçon est pourvu d'un logement dans lequel un verrou est monté mobile transversalement au canal entre une position de verrouillage dans laquelle le verrou est rappelé élastiquement par un ressort et une position de déverrouillage. Le verrou est pourvu d'un alésage transversal permettant à l'embout de traverser le verrou pour venir pousser le clapet, un premier redan et un deuxième redan s'étendant en saillie dans l'alésage en des positions axialement décalées de telle manière que le premier redan retienne l'embout dans une position enfoncée maintenant le clapet en position de dégagement lorsque le verrou est en position de verrouillage et le deuxième redan retienne l'embout dans une position intermédiaire laissant le clapet en position d'obturation lorsque le verrou est en position de déverrouillage et permettant une purge de l'embout.

Lorsque l'embout est connecté au corps, il est retenu dans le canal par le premier redan du verrou en position de verrouillage et repousse le clapet en position de dégagement.

Le fluide peut circuler sous pression entre le corps et l'embout. Pour déconnecter l'embout vis-à-vis du corps, il suffit d'amener le verrou en position de déverrouillage : sous la pression du fluide et du ressort de rappel du clapet en position d'obturation, l'embout recule jusqu'à arriver en butée contre le deuxième redan qui retient l'embout en position intermédiaire. Le clapet est alors en position d'obturation et l'embout est décollé du clapet autorisant l'échappement du fluide présent dans la partie du circuit raccordée à l'embout. Cette purge au moins partielle de cette partie du circuit y fait chuter la pression. Un tel dispositif est cependant peu pratique car il faut maintenir le verrou en position de déverrouillage suffisamment longtemps pour que la pression dans cette partie du circuit s'équilibre avec la pression ambiante sans quoi l'embout pourrait être violemment éjecté du dispositif de raccordement.

Le document EP 1 422 461 A1 divulgue un autre exemple de dispositif de raccordement.

### Objet de l'invention

Un but de l'invention est de fournir un dispositif de raccordement qui soit plus pratique que les dispositifs de raccordement connus tout en conservant une structure simple.

### Bref exposé de l'invention

A cet effet, on prévoit, selon l'invention un dispositif d'accouplement comprenant un corps tubulaire délimitant un canal ayant, de manière axialement successive, un premier tronçon pour recevoir un embout et un deuxième tronçon dans lequel un clapet est monté pour être mobile axialement sous une poussée de l'embout depuis une position d'obturation d'un siège s'étendant entre le premier tronçon et le deuxième tronçon vers une position de dégagement du siège, le premier tronçon étant pourvu d'un logement dans lequel un verrou est monté mobile transversalement au canal entre une position de verrouillage dans laquelle le verrou est rappelé élastiquement par un ressort et une position de déverrouillage, le verrou étant pourvu d'un alésage transversal permettant à l'embout de traverser le verrou pour venir pousser le clapet, un premier redan et un deuxième redan s'étendant en saillie dans l'alésage en des positions axialement décalées de telle manière que le premier redan retienne l'embout dans une position enfoncée maintenant le clapet en position de dégagement lorsque le verrou est en position de verrouillage et le deuxième redan retienne l'embout dans une position intermédiaire laissant le clapet en position d'obturation lorsque le verrou est en position de déverrouillage et permettant une purge de l'embout.

Le verrou est mobile selon une direction axiale du canal entre une première position axiale dans laquelle le verrou et une paroi du logement ont un premier couple de portions de retenue mutuellement en contact pour retenir le verrou en position de déverrouillage et une deuxième position axiale dans laquelle lesdites portions de retenue sont dégagées l'une vis-à-vis de l'autre, la deuxième position axiale étant plus proche du clapet que la première position axiale.

Ainsi, lors de la déconnexion, l'embout recule sous la pression et du fait du mouvement du clapet jusqu'à venir en butée contre le deuxième redan et entraîne le verrou, alors en position de déverrouillage, vers sa première position axiale. Dans cette position axiale, les portions de retenue coopèrent entre elles pour maintenir le verrou dans sa position de déverrouillage sans qu'il soit nécessaire que l'opérateur assure lui-même ce maintien.

D'autres caractéristiques et avantages de l'invention ressortiront à la lecture de la description qui suit d'un mode de réalisation particulier et non limitatif de l'invention.

### Brève description des dessins

Il sera fait référence aux dessins annexés, parmi lesquels :
[Fig.1] la figure 1 est une vue en coupe axiale d'un dispositif de raccordement selon l'invention, avant raccordement d'un embout ;
[Fig.2] la figure 2 est une vue analogue à la figure 1 après raccordement de l'embout, l'embout est en position connectée dans le dispositif de raccordement et le verrou est en position transversale de verrouillage et en deuxième position axiale ;
[Fig.3] la figure 3 illustre une première étape de déconnexion et est une vue analogue à la figure 1 dans laquelle le verrou est en position transversale de déverrouillage et en première position axiale et l'embout est en position intermédiaire ;
[Fig.4] la figure 4 illustre une deuxième étape de déconnexion et est une vue analogue à la figure 1 dans laquelle le verrou est en position transversale de déverrouillage et en première position axiale, l'embout est en cours de purge ;
[Fig.5] la figure 5 illustre une troisième étape de déconnexion et est une vue analogue à la figure 1 dans laquelle le verrou est en position transversale de verrouillage et en deuxième position axiale, et l'embout est en cours d'extraction.

### Description détaillée de l'invention

En référence aux figures, le dispositif d'accouplement selon l'invention, généralement désigné en 1, est adapté pour relier un premier élément et un deuxième élément d'un circuit de transport de fluide. Les éléments de circuit, qui ne sont pas visibles sur les figures, sont par exemple des conduites, une conduite et une pompe, une conduite et un réservoir, une conduite et un distributeur, une conduite et un actionneur... Le premier élément est relié à une première portion d'extrémité d'un embout tubulaire, généralement désigné en 1000, ayant à l'opposé une deuxième portion d'extrémité qui est pourvue extérieurement d'une collerette 1001 et qui est prolongée au-delà de la collerette 1001 par un nez 1002. La première portion d'extrémité de l'embout 1000 est relié à l'élément de circuit de façon connue en elle-même et par exemple par emmanchement à force, collage, soudage, brasage, collier de serrage... selon le matériau de l'élément de circuit et le matériau de l'embout. Le deuxième élément est relié au dispositif d'accouplement 1 comme on va le voir par la suite.

Le dispositif de raccordement 1 comprend un corps tubulaire 2 délimitant un canal 3 ayant, de manière axialement successive, un premier tronçon 31 et un deuxième tronçon 32 qui sont coaxiaux l'un à l'autre et séparés l'un de l'autre par un tronçon intermédiaire 33.

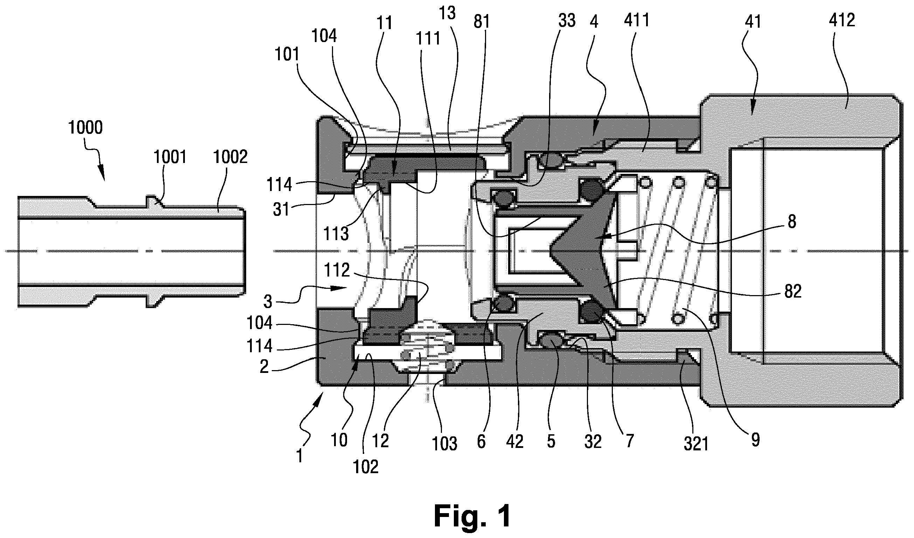

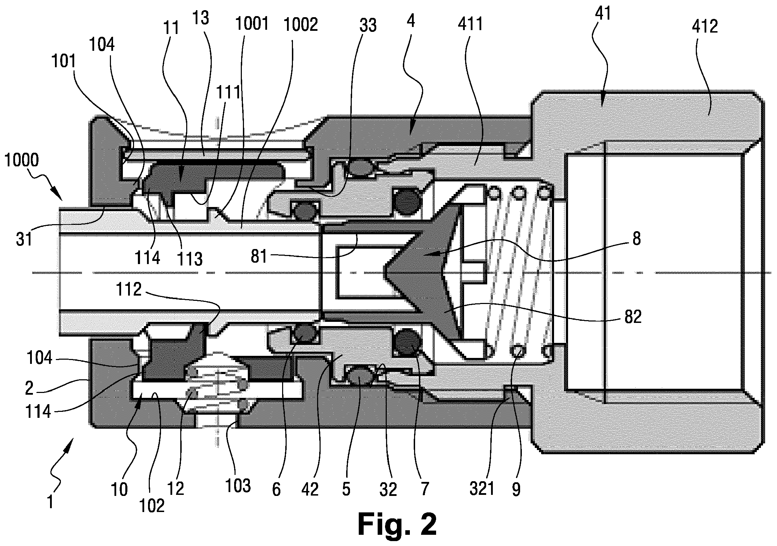

Le deuxième tronçon 32 reçoit une partie d'un ensemble, généralement désigné en 4, de connexion au deuxième élément de circuit. L'ensemble de connexion 4 comprend une douille 41 prolongée par un insert tubulaire 42. La douille 41 a une première portion d'extrémité 411 filetée engagée dans un taraudage d'extrémité 321 du deuxième tronçon 32 et une deuxième portion d'extrémité 412 taraudée dans laquelle une portion filetée du deuxième élément de circuit est destinée à être vissée. L'insert tubulaire 42 s'étend en saillie de la première portion d'extrémité 411 jusque dans le tronçon intermédiaire 33 du canal 3 et est fixé à la première portion d'extrémité 411 par collage, soudage, clipage (« snap fastening ») ou autre. L'insert tubulaire 42 est équipé : d'un joint d'étanchéité externe 5 dimensionné pour assurer une étanchéité entre la paroi interne du deuxième tronçon 32 et la surface externe de l'insert tubulaire 42 ; d'un premier joint d'étanchéité interne 6 dimensionné pour assurer une étanchéité entre la surface externe du nez 1002 et la surface interne de l'insert tubulaire 42 ; et d'un deuxième joint d'étanchéité interne 7 dimensionné pour assurer une étanchéité entre la surface externe d'un clapet 8 et la surface interne de l'insert tubulaire 42. Le clapet 8 est monté dans l'insert tubulaire 42 pour être mobile axialement sous une poussée de l'embout depuis une position d'obturation d'un siège délimité par le deuxième joint d'étanchéité interne 7 (position représentée à la figure 1) vers une position de dégagement du siège dans laquelle le clapet 8 n'est plus en contact avec le deuxième joint d'étanchéité interne 7 (figure 2). Le clapet 8 comprend un corps de guidage 81, ajouré pour permettre le passage du fluide, s'étendant dans l'insert tubulaire 42 et traversant le deuxième joint d'étanchéité interne 7, et une tête 82 s'étendant du côté du deuxième joint d'étanchéité interne 7 opposé au premier joint d'étanchéité interne 6. La tête 82 se raccorde au corps de guidage 81 par une surface tronconique convexe destinée à prendre appui contre le deuxième joint d'étanchéité interne 7 et possède une surface plate sur laquelle prend appui un ressort hélicoïdal 9 s'étendant axialement dans la première portion d'extrémité 411 de la douille 41 en prenant appui sur un épaulement interne de la douille 41 pour repousser le clapet 8 vers sa position d'obturation.

Le premier tronçon 31 est agencé pour recevoir la deuxième portion d'extrémité de l'embout 1000 et est pourvu d'un logement 10 qui s'étend transversalement au premier tronçon 31 et a une première extrémité 101 débouchant à l'extérieur du corps 2 et une deuxième extrémité fermée par un fond 102 percé d'un orifice de purge 103 débouchant à l'extérieur du corps 2. De chaque côté du premier tronçon 31, le logement 10 comprend un relief 104, de section sensiblement triangulaire, ayant un flanc, orienté vers le fond 102, qui est en pente.

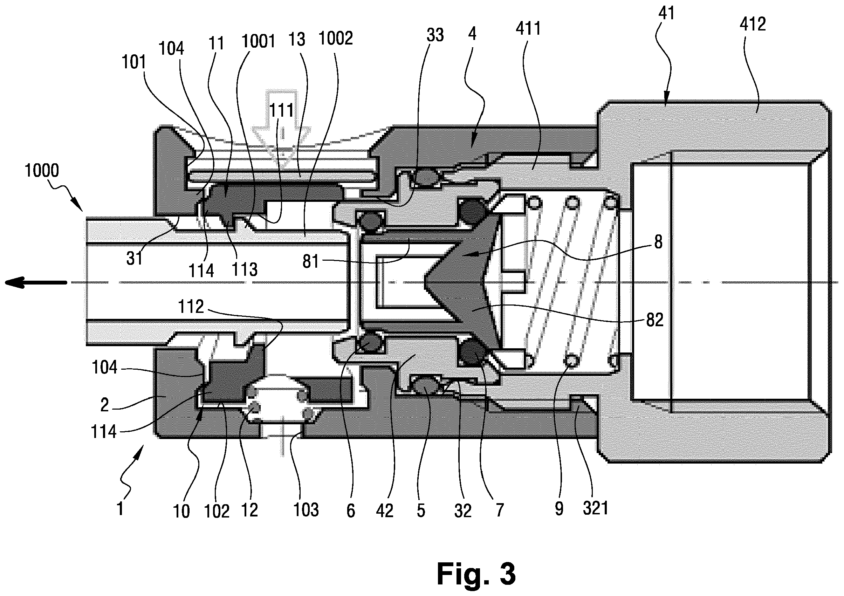

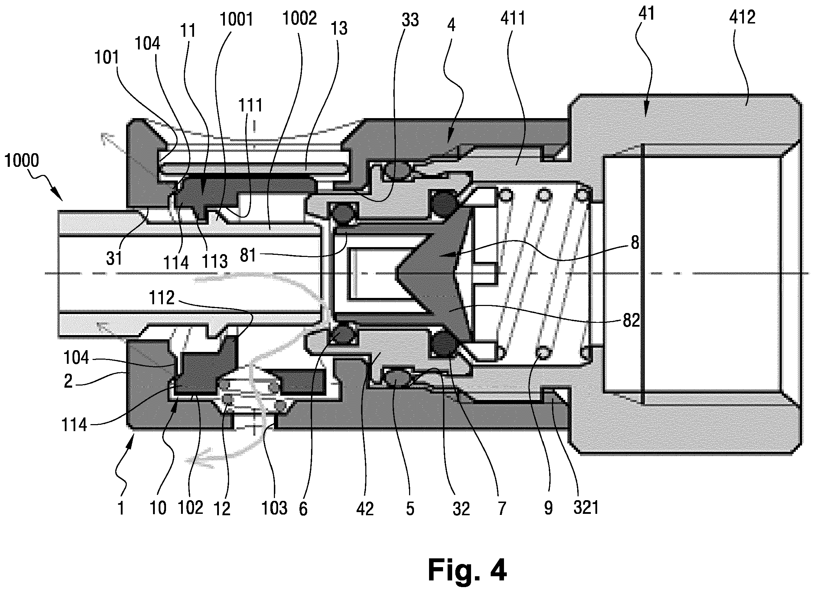

Un verrou 11 est monté dans le logement 10. Le verrou 11 est mobile dans le logement 10 transversalement au canal 3 entre une position de verrouillage dans laquelle le verrou 11 est proche de la première extrémité 101 (position représentée aux figures 1, 2 et 5) et une position de déverrouillage dans laquelle le verrou 11 est proche du fond 102 (figures 3 et 4). Un ressort 12 hélicoïdal s'étend entre le fond 102 et le verrou 11 pour repousser le verrou 11 vers sa position de verrouillage. Le ressort 12 prend appui sur un lamage ménagé autour de l'orifice de purge 103 dans le fond 102, le lamage ayant une paroi latérale maintenant l'extrémité du ressort 12 qu'il reçoit dans une position coaxiale au logement 10.

Le verrou 11 est pourvu d'un alésage transversal 111 d'axe parallèle à l'axe du premier tronçon 31 pour permettre à la portion d'extrémité de l'embout 1000 inséré dans le premier tronçon 31 de traverser le verrou 11 pour venir pousser le clapet 8 en position de dégagement. L'alésage transversal 111 est pourvu d'un premier redan 112 et d'un deuxième redan 113 s'étendant en saillie dans l'alésage 111 en des positions axialement décalées de telle manière que :
- lorsque le verrou 11 est en position de verrouillage, le premier redan 112 retient la collerette 1001 de l'embout 1000 dans une position enfoncée dans laquelle le nez 1002 traverse le premier joint d'étanchéité interne 6 pour venir en appui contre le corps de guidage 81 et maintenir le clapet 8 en position de dégagement (figure 1) ; et
- lorsque le verrou 11 est en position de déverrouillage, le deuxième redan 113 retient la collerette 1001 de l'embout 1000 dans une position intermédiaire dans laquelle le nez 1002 est sorti du premier joint d'étanchéité interne 6 et laisse le clapet 8 en position d'obturation de manière à permettre une purge de l'embout 1000 (figures 3 et 4).

On notera que la position de verrouillage est définie par l'extrémité libre de l'insert 42 qui s'étend en saillie dans le logement 10 et l'alésage 111 du verrou 11. L'insert 42 assure ainsi une double fonction (guidage du clapet 8 et blocage du verrou 11 dans son logement 10). La position de déverrouillage est, elle, définie par le fond 102.

On comprend que le premier redan 112 et le deuxième redan 113 sont disposés en des côtés opposés de l'alésage 111 : le premier redan 112 est du côté du fond 102 et le deuxième redan 113 est du côté de la première extrémité 101. On comprend également que le premier redan 112 est plus proche du deuxième tronçon 32 que le deuxième redan 113.

Le verrou 11 présente deux reliefs 114 décalés l'un par rapport à l'autre selon l'axe du logement 10 d'un écartement égal à l'écartement des reliefs 104. Les reliefs 114 ont une section sensiblement triangulaire et ont un flanc, orienté vers la première extrémité 101, qui est en pente.

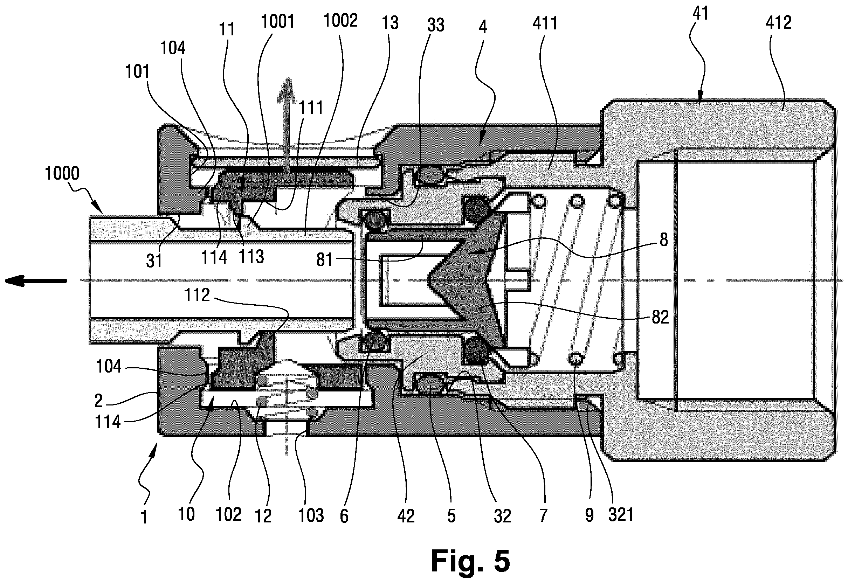

Le verrou 11 présente une dimension, mesurée parallèlement à l'axe central du premier tronçon 31, inférieure à une dimension, mesurée selon ce même axe, du logement 10 de sorte que le verrou 11 est mobile selon une direction axiale du premier tronçon 31 du canal 3 entre une première position axiale dans laquelle le verrou 11 et une paroi du logement 10 ont deux couple de portions de retenue mutuellement en contact pour retenir le verrou en position de déverrouillage (figures 3 et 4) et une deuxième position axiale dans laquelle lesdites portions de retenue de chaque couple de portions de retenue sont dégagées l'une vis-à-vis de l'autre et laissent le verrou 11 remonter vers sa position de verrouillage (figure 5), la deuxième position axiale étant plus proche du clapet 8 que la première position axiale. Chaque couple de portions de retenue est formé par un des reliefs 104 et le relief 114 adjacent.

Le ressort hélicoïdal 12 est agencé pour assurer également le rappel du verrou 11 vers sa deuxième position axiale.

La pente de chacun des reliefs 104, 114 forme une came tendant à déplacer le verrou 11 de sa première position axiale à sa deuxième position axiale lorsque les pentes des reliefs 104, 114 sont en contact et lorsque le verrou 11 se déplace de sa position de déverrouillage à sa position de verrouillage.

La première extrémité 101 du logement 10 accueille un bouton 13 d'actionnement du verrou 11. Le bouton 13, qui a ici la simple forme d'un disque, est en contact avec l'extrémité du verrou 11 et est mobile en translation selon l'axe du logement 10. Le bouton 13 peut être percé pour favoriser la purge de l'embout 1000.

Bien entendu, l'invention n'est pas limitée au mode de réalisation décrit mais englobe toute variante entrant dans le champ de l'invention telle que définie par les revendications.

En particulier, le dispositif peut avoir une structure différente de celle décrite.

Le dispositif peut ne comprendre qu'un couple de portions de retenue.

Seule une portion de retenue d'un ou de chaque couple de portions de retenue peut comprendre une pente.

Les portions de retenue pourraient ne pas comprendre de pente, un moyen de rappel élastique, comme le ressort 12, étant utilisé pour rappeler le verrou 11 dans sa deuxième position axiale.

Le bouton d'actionnement est facultatif. L'opérateur pourrait agir directement sur le verrou.

Le fluide s'échappant lors de la purge de l'embout peut emprunter les espaces résultant des jeux de montage et fabrication, ou emprunter des canaux ou orifices réalisés à cet effet dans le corps 2 et/ou le verrou 11.

Le maintien du verrou 11 dans son logement 10 peut être assuré par une goupille dédiée remplaçant l'extrémité libre de l'insert 42.

## Revendications

1. Dispositif d'accouplement (1) comprenant un corps tubulaire (2) délimitant un canal (3) ayant, de manière axialement successive, un premier tronçon (31) pour recevoir un embout (1000) et un deuxième tronçon (32) dans lequel un clapet (8) est monté pour être mobile axialement sous une poussée de l'embout (1000) depuis une position d'obturation d'un siège (7) s'étendant entre le premier tronçon (31) et le deuxième tronçon (32) vers une position de dégagement du siège (7), le premier tronçon (31) étant pourvu d'un logement (10) dans lequel un verrou (11) est monté mobile transversalement au canal (3) entre une position de verrouillage dans laquelle le verrou (11) est rappelé élastiquement par un ressort (9) et une position de déverrouillage, le verrou (11) étant pourvu d'un alésage (111) transversal permettant à l'embout (1000) de traverser le verrou (11) pour venir pousser le clapet (8), un premier redan (112) et un deuxième redan (113) s'étendant en saillie dans l'alésage (111) en des positions axialement décalées de telle manière que le premier redan (112) retienne l'embout (1000) dans une position enfoncée maintenant le clapet (8) en position de dégagement lorsque le verrou (11) est en position de verrouillage et le deuxième redan (113) retienne l'embout (1000) dans une position intermédiaire laissant le clapet (8) en position d'obturation lorsque le verrou (11) est en position de déverrouillage et permettant une purge de l'embout (1000), **caractérisé en ce que** le verrou (11) est mobile selon une direction axiale du canal (3) entre une première position axiale dans laquelle le verrou (11) et une paroi du logement (10) ont un premier couple de portions de retenue (114, 104) mutuellement en contact pour retenir le verrou (11) en position de déverrouillage et une deuxième position axiale dans laquelle lesdites portions de retenue (114, 104) sont dégagées l'une vis-à-vis de l'autre, la deuxième position axiale étant plus proche du clapet (8) que la première position axiale.

2. Dispositif selon la revendication 1, dans lequel le logement (10) du verrou (11) est pourvu d'un orifice (103) débouchant à l'extérieur du corps (2) pour permettre la purge de l'embout (1000).

3. Dispositif selon la revendication 1 ou 2, dans lequel le verrou (11) est rappelé vers sa position de verrouillage par un ressort hélicoïdal (12) s'étendant entre un fond (102) du logement (10) du verrou (11) et le verrou (11) .

4. Dispositif selon la revendication 3, dans lequel le ressort hélicoïdal (12) est agencé pour assurer également le rappel du verrou (11) vers sa deuxième position axiale.

5. Dispositif selon l'une quelconque des revendications précédentes, dans lequel la portion de retenue (104) solidaire de la paroi du logement (10) comporte une pente formant une came tendant à déplacer le verrou (11) de sa première position axiale à sa deuxième position axiale lorsque les portions de retenue (104, 114) sont en contact et lorsque le verrou (11) se déplace de sa position de déverrouillage à sa position de verrouillage.

6. Dispositif selon l'une quelconque des revendications précédentes, dans lequel la portion de retenue (114) solidaire du verrou (11) comporte une pente formant une came tendant à déplacer le verrou (11) de sa première position axiale à sa deuxième position axiale lorsque les portions de retenue (104, 114) sont en contact et lorsque le verrou (11) se déplace de sa position de déverrouillage à sa position de verrouillage.

7. Dispositif selon l'une quelconque des revendications précédentes, dans lequel le verrou (11) et la paroi du logement (10) ont un deuxième couple de portions de retenue (104, 114) qui sont mutuellement en contact lorsque le verrou (11) est dans sa première position axiale pour retenir le verrou (11) en position de déverrouillage et qui sont dégagées l'une de l'autre lorsque le verrou (11) est dans sa deuxième position axiale, le canal (3) passant entre le premier couple de portions de retenue (104, 114) et le deuxième couple de portions de retenue (104, 114).

8. Dispositif selon l'une quelconque des revendications précédentes, dans lequel le logement (10) a une extrémité (101) débouchant à l'extérieur du corps (2) et accueillant un bouton (13) d'actionnement du verrou (11).

9. Dispositif selon la revendication 8, dans lequel le bouton (13) d'actionnement du verrou (11) est percé pour favoriser la purge de l'embout (1000).

## Patentansprüche

1. Kopplungsvorrichtung (1), umfassend einen rohrförmigen Körper (2), der einen Kanal (3) begrenzt, der axial aufeinanderfolgend einen ersten Abschnitt (31) zur Aufnahme eines Ansatzstückes (1000) und einen zweiten Abschnitt (32) hat, in dem ein Ventil (8) gelagert ist, um unter einem Schub des Ansatzstückes (1000) von einer Schließstellung zum Verschließen eines Sitzes (7), der sich zwischen dem ersten Abschnitt (31) und dem zweiten Abschnitt (32) erstreckt, in Richtung einer Freigabestellung des Sitzes (7) axial beweglich zu sein, wobei der erste Abschnitt (31) mit einer Aufnahme (10) versehen ist, in der ein Riegel (11) quer zum Kanal (3) zwischen einer Verriegelungsposition, in die der Riegel (11) durch eine Feder (9) elastisch rückgestellt ist, und einer Entriegelungsposition beweglich gelagert ist, wobei der Riegel (11) mit einer Querbohrung (111) versehen ist, die es dem Ansatzstück (1000) ermöglicht, durch den Riegel (11) hindurchzugehen, um gegen das Ventil (8) zu drücken, wobei ein erster Vorsprung (112) und ein zweiter Vorsprung (113) in die Bohrung (111) in axial versetzten Positionen derart vorstehen, dass der erste Vorsprung (112) das Ansatzstück (1000) in einer eingedrückten Position hält, die das Ventil (8) in Freigabestellung hält, wenn der Riegel (11) in der Verriegelungsposition ist, und der zweite Vorsprung (113) das Ansatzstück (1000) in einer Zwischenposition hält, die das Ventil (8) in seiner Schließstellung lässt, wenn der Riegel (11) in der Entriegelungsposition ist, und eine Entlüftung des Ansatzstückes (1000) ermöglicht, **dadurch gekennzeichnet, dass** der Riegel (11) in axialer Richtung des Kanals (3) zwischen einer ersten axialen Position, in der der Riegel (11) und eine Wand der Aufnahme (10) ein erstes Paar von Halteabschnitten (114, 104) in gegenseitigem Kontakt haben, um den Riegel (11) in der Entriegelungsposition zu halten, und einer zweiten axialen Position, in der die genannten Halteabschnitte (114, 104) relativ voneinander gelöst sind, wobei die zweite axiale Position näher am Ventil (8) ist als die erste axiale Position.

2. Vorrichtung nach Anspruch 1, bei der die Aufnahme (10) für den Riegel (11) mit einer Öffnung (103) versehen ist, die nach außerhalb des Körpers (2) mündet, um die Entlüftung des Ansatzstückes (1000) zu ermöglichen.

3. Vorrichtung nach Anspruch 1 oder 2, bei der der Riegel (11) durch eine Schraubenfeder (12), die sich zwischen einem Boden (102) der Aufnahme (10) für den Riegel (11) und dem Riegel (11) erstreckt, in seine Verriegelungsposition rückgestellt wird.

4. Vorrichtung nach Anspruch 3, bei der die Schraubenfeder (12) ausgebildet ist, ferner die Rückstellung des Riegels (11) in seine zweite axiale Position sicherzustellen.

5. Vorrichtung nach einem der vorhergehenden Ansprüche, bei der der Rückhalteabschnitt (104), der fest mit der Wand der Aufnahme (10) verbunden ist, eine Schräge umfasst, die einen Nocken bildet, der dazu neigt, den Riegel (11) von seiner ersten axialen Position in seine zweite axiale Position zu verschieben, wenn die Halteabschnitte (104, 114) in Kontakt sind und wenn sich der Riegel (11) von seiner Entriegelungsposition in seine Verriegelungsposition verschiebt.

6. Vorrichtung nach einem der vorhergehenden Ansprüche, bei der der Halteabschnitt (114), der fest mit dem Riegel (11) verbunden ist, eine Schräge umfasst, die einen Nocken bildet, der dazu neigt, den Riegel (11) von seiner ersten axialen Position in seine zweite axiale Position zu verschieben, wenn die Halteabschnitte (104, 114) in Kontakt sind und wenn sich der Riegel (11) von seiner Entriegelungsposition in seine Verriegelungsposition verschiebt.

7. Vorrichtung nach einem der vorhergehenden Ansprüche, bei der der Riegel (11) und die Wand der Aufnahme (10) ein zweites Paar von Halteabschnitten (104, 114) haben, die gegenseitig in Kontakt sind, wenn der Riegel (11) in seiner ersten axialen Position ist, um den Riegel (11) in der Entriegelungsposition zu halten, und die voneinander gelöst sind, wenn der Riegel (11) in seiner zweiten axialen Position ist, wobei der Kanal (3) zwischen dem ersten Paar von Halteabschnitten (104, 114) und dem zweiten Paar von Halteabschnitten (104, 114) verläuft.

8. Vorrichtung nach einem der vorherigen Ansprüche, bei der die Aufnahme (10) ein Ende (101) hat, das nach außerhalb des Körpers (2) mündet und einen Knopf (13) zur Betätigung des Riegels (11) aufnimmt.

9. Vorrichtung nach Anspruch 8, bei der der Knopf (13) zur Betätigung des Riegels (11) durchbohrt ist, um die Entlüftung des Ansatzstückes (1000) zu begünstigen.

## Claims

1. A coupling device (1) comprising a tubular body (2) defining a channel (3) having successively along an axis a first segment (31) for receiving an endpiece (1000) and a second segment (32) in which a valve member (8) is mounted to be axially movable under thrust from the endpiece (1000) from a closed position closing a seat (7) that extends between the first segment (31) and the second segment (32), towards a disengaged position disengaging the seat (7), the first segment (31) being provided with a housing (10) in which a latch (11) is movably mounted to move transversely relative to the channel (3) between an unlocking position and a locking position into which the latch (11) is urged by a spring (9), the latch (11) being provided with a transverse bore (111) enabling the endpiece (1000) to pass through the latch (11) to push against the valve member (8), a first step (112) and a second step (113) projecting into the bore (111) in axially offset positions in such a manner that, when the latch (11) is in the locking position, the first step (112) retains the endpiece (1000) in a pushed-in position holding the valve member (8) in its disengaged position, and when the latch (11) is in the unlocking position, the second step (113) retains the endpiece (1000) in an intermediate position leaving the valve member (8) in its closed position, thereby enabling the endpiece (1000) to be purged, the coupling device being **characterized in that** the latch (11) is movable along the axial direction of the channel (3) between a first axial position in which the latch (11) and a wall of the housing (10) have a first pair of retaining portions (114, 104) in mutual contact to retain the latch (11) in the unlocking position, and a second axial position in which said retaining portions (114, 104) are disengaged from each other, the second axial position being closer to the valve member (8) than the first axial position.

2. A device according to claim 1, wherein the housing (10) for the latch (11) is provided with an orifice (103) opening to the outside of the body (2) to enable the endpiece (1000) to be purged.

3. A device according to claim 1 or claim 2, wherein the latch (11) is urged towards its locking position by a helical spring (12) extending between the latch (11) and an end wall (102) of the housing (10) for the latch (11).

4. A device according to claim 3, wherein the helical spring (12) is also arranged to ensure that the latch (11) is urged towards its second axial position.

5. A device according to any preceding claim, wherein the retaining portion (104) secured to the wall of the housing (10) has a slope forming a cam tending to move the latch (11) away from its first axial position towards its second axial position when the retaining portions (104, 114) are in contact and when the latch (11) is moving from its unlocking position to its locking position.

6. A device according to any preceding claim, wherein the retaining portion (114) secured to the latch (11) has a slope forming a cam tending to move the latch (11) away from its first axial position towards its second axial position when the retaining portions (104, 114) are in contact and when the latch (11) is moving from its unlocking position to its locking position.

7. A device according to any preceding claim, wherein the latch (11) and the wall of the housing (10) have a second pair of retaining portions (104, 114) that are mutually in contact when the latch (11) is in its first axial position to retain the latch (11) in its unlocking position, and that are disengaged from each other when the latch (11) is in its second axial position, the channel (3) passing between the first pair of retaining portions (104, 114) and the second pair of retaining portions (104, 114).

8. A device according to any preceding claim, wherein the housing (10) has an end (101) opening to the outside of the body (2) and receiving a button (13) for actuating the latch (11).

9. A device according to claim 8, wherein the button (13) for actuating the latch (11) is pierced in order to facilitate purging the endpiece (1000).
